# EUROPÄISCHE PATENTANMELDUNG

(11) **EP 1 247 946 A2**
(43) Veröffentlichungstag der Anmeldung: **09.10.2002**
(21) Anmeldenummer: 02006130.5
(22) Anmeldetag: 19.03.2002
(51) Int. Cl.: F01L 1/30

(54) **Ventiltrieb**

(30) Priorität: 26.03.2001 AT 4782001
(71) Anmelder: Battlogg, Stefan, 6771 St. Anton/Montafon (AT)
(72) Erfinder: Battlogg, Stefan, 6771 St. Anton/Montafon (AT)
(74) Vertreter: Torggler, Paul, Dr.

(57) **Zusammenfassung**

Ein Ventiltrieb für Brennkraftmaschinen weist mindestens ein angetriebenes Nockenelement (2) und ein vom Nockenelement (2) gegen eine Rückstellkraft bewegbares Nockenfolgeelement (10) auf. Das Nockenelement (2) ist drehbar in einem flexiblen Umschließungselement (4) angeordnet, das mit dem Nockenfolgeelement (10) gelenkig verbunden ist. Die Verbindungsstelle (12) zwischen dem Umschließungselement (4) und dem Nockenfolgeelement (10) weist im Grundkreisbereich (71) des Nockenelementes (2) einen eine Verlängerung des Nockenfolgeelements (10) erlaubenden Abstand (a) vom Nockenelement (2) auf.

## Beschreibung

Die Erfindung betrifft einen Ventiltrieb, insbesondere für Brennkraftmaschinen von Kraftfahrzeugen, mit mindestens einem angetriebenen Nockenelement, dessen Umfangsfläche einen Grundkreisbereich und einen Nockenbereich aufweist, und mit einem vom Nockenelement gegen eine Rückstellkraft bewegbaren Nockenfolgeelement, insbesondere einem Ventilstößel, wobei das Nockenelement drehbar in einem flexiblen Umschließungselement angeordnet ist, das mit dem Nockenfolgeelement gelenkig verbunden ist.

Vor allem die Länge eines Ventilstößels unterliegt thermisch verursachten Änderungen, d.h. im Ruhezustand und zu Beginn des Betriebes weist der Ventilstößel die geringste Länge auf. Durch die Erwärmung der Brennkraftmaschine ergibt sich eine Längendehnung der Ventilstößel zumindest bei üblichen Brennkraftmaschinen für Personenkraftfahrzeuge von etwa 0,2 mm. Zusätzlich betragen Produktionsungenauigkeiten, Verschleiß, usw. im allgemeinen nicht mehr als 0,1 mm, sodaß die Längenänderung im Normalfall 0,3 mm nicht überschreitet.

Das Nockenfolgeelement darf auch bei maximaler Verlängerung nur am Grundkreis anliegen, damit der Ventilteller einwandfrei im Ventilsitz liegt, sodaß das Ventil unabhängig von der Länge des Nockenfolgeelements dichtend geschlossen ist. Für die Längenänderung von 0,3 mm muß daher ein Ausgleichsspielraum vorhanden sein, wobei bekannte Lösungen mechanische oder hydraulische Ventilspielausgleichseinrichtungen vorsehen. Mechanische Spielausgleichsvorrichtungen weisen im allgemeinen zusätzlich zur Ventilfeder Federn zwischen zwei relativ zueinander beweglichen Teilen des Ventilstößels auf.

Weiters sind zwangsgeführte Ventilteile bekannt, bei denen die Ventilfeder dadurch erübrigt wird, daß das obere Ende des Ventilstößels in einer nockenförmigen Nut geführt wird. Auch bei derartigen Ventiltrieben umfaßt ein mechanischer Ventilspielausgleich eine Feder zwischen zwei relativ zueinander beweglichen Teile des Ventilstößels, wie beispielsweise die US 1,238,175 A oder US 1,937,152 A zeigt.

Eine spezielle Ausführung eines desmodromischen Ventiltriebs zeigt die DE 37 00 715. Hier ist das Nockenelement von einem flexiblen Umschließungselement umgeben, an dem der Nockenfolgeelement angelenkt ist. Diese Verbindung hindert das Umschließungselement daran, sich mit dem Nockenelement mitzudrehen, wodurch das im Umschließungselement umlaufende Nockenelement ohne Rückstellfedern den Ventilhub bewirkt.

Die Erfindung hat es sich nun zur Aufgabe gestellt, einen mechanischen Ventilspielausgleich für einen desmodromischen Ventiltrieb zu schaffen, und erreicht dies dadurch, daß die Verbindungsstelle zwischen dem Umschließungselement und dem Nockenfolgeelement im Grundkreisbereich einen eine Verlängerung des Ventilstößels erlaubenden Abstand vom Nockenelement aufweist.

Das eine geschlossene Schlaufe bildende Umschließungselement ist somit um so viel länger als die Umschließungslänge des Nockenelementes, daß der Ventilteller dann, wenn das Nockenfolgeelement seine kürzeste Länge in Richtung des Ventihubs aufweist, dichtend im Ventilsitz liegt. Der Ventilsitz dient als Anschlag, und das flexible Umschließungselement liegt über einen beträchtlichen Teil des Nockenelementes im wesentlichen spielfrei straff am Nockenelement an. Der Abstand zwischen dem Umschließungselement und dem Grundkreisbereich des Nockenelementes entspricht zumindest dem maximal möglichen Verlängerungsmaß des Nockenfolgeelements. Diese kürzeste Länge liegt üblicherweise im Ruhezustand bzw. zu Beginn des Betriebes vor, wenn die Ventilwerkstoffe eine größere thermische Dehnung aufweisen als die Konstruktionswerkstoffe des Zylinderkopfes. Mit fortlaufendem Betrieb erhöht sich die Temperatur, das Nockenfolgeelement wird länger, und das Umschließungselement lockert sich. Die kürzeste Länge kann aber auch bei maximaler Betriebstemperatur gegeben sein, wenn nämlich die Ventilwerkstoffe eine geringere Wärmedehnung aufweisen als der Zylinderkopf. Dies ist beispielsweise bei keramischen Ventilen und einem Zylinderkopf aus Aluminium der Fall.

Der dichtende Sitz des Ventiltellers in der Schließstellung kann bei verlängertem Nockenfolgeelement trotz lockerer Schlaufe durch eine Rückstellkraft erhalten bleiben, die durch verschiedene Maßnahmen erzielbar ist. Eine erste Möglichkeit zur Erzeugung der Rückstellkraft nützt den Verdichtungs- und/oder Expansionsdruck im Zylinder aus, um den mit Hilfe des Umschließungselementes in die Schließstellung beschleunigten Ventilteller über den Grundkreisbereich trotz des "schlotternden" Umschließungselementes im Ventilsitz zu halten, bis die Öffnungsphase beginnt. Diese Möglichkeit läßt sich vor allem für Motoren mit höheren Drehzahlen nutzen, bei denen im unteren Drehzahlenbereich weder höhere Leistungen noch höhere Drehmomente erwartet werden. Eine geringfügige Undichtheit des Ventils im gegebenenfalls erweiterten Leerlauf kann im allgemeinen hingenommen werden.

Eine zweite Möglichkeit zur Erzeugung der Rückstellkraft besteht natürlich trotz des Umschließungselementes in der Verwendung einer Ventilfeder, die eine wesentlich kleinere Kraft erzeugt als es in herkömmlichen nicht zwangsgesteuerten Ventiltrieben der Fall ist.

Eine dritte, bevorzugte Möglichkeit sieht vor, daß das Umschließungselement auf Kontraktion vorgespannt ist. Das Ausmaß der Vorspannung kann dabei sehr gering sein, da die erforderliche Verkürzung der Länge des Umschließungselementes ebenfalls sehr klein ist. Das eingangs erwähnte Abstandsmaß von 0,3 mm steht beispielsweise in Relation zu Nockenelementen mit einem Grundkreisradius von 20 bis 25 mm. Abhängig von der Nockenform ergeben sich Umschließungslängen des Nockenelementes in einer Größenordnung von etwa 120 bis 180 mm. Bei derartigen Nockenelementen ergibt sich eine Verkürzung des Umschließungselementes von maximal 6 bis 7 mm, also etwa einem halben Prozent der Umschließungslänge.

Ein reversibel verkürzbares Umschließungselement ist vorzugsweise aus zumindest zwei verschiedenen Materialien zusammengesetzt, von denen ein Material elastisch dehnbar ist. Beispielsweise kann ein dehnfestes Band durch ein elastisch dehnbares Zwischenstück zum Umschließungselement geschlossen sein, wobei die Verbindungsstelle entweder im zugfesten oder im elastisch dehnbaren Bereich vorgesehen sein kann.

Um den die Nullstellung bei kürzestem Ventilstößel entsprechenden Grenzwert der elastischen Dehnung sicherzustellen, ist dem elastisch dehnbaren Material bevorzugt eine Dehnungsbegrenzung zugeordnet, indem im dehnbaren Material oder parallel dazu dehnfeste Fäden oder Fasern angeordnet sind, deren Länge der Länge des bis zum Grenzwert gedehnten elastischen Materials entspricht.

Das in einer textilen Rundarbeitstechnik (Rundweben, Rundstricken, Rundwirken usw.) hergestellte Flächenmaterial weist insbesondere in Umfangsrichtung des Nockenelementes sich erstreckende Fäden aus Kevlar-, Glas-, Karbon-, Hochmodulpolyethylen-, Polyester-, Bor-, Aramidfasern oder ähnlichen, im wesentlichen längenkonstanten Fasern, bzw. Kombinationen dieser Fasern auf. Die elastische Dehnung kann linear, progressiv oder degressiv gewählt werden, indem beispielsweise Fäden mit unterschiedlicher Dehnungseigenschaften eingearbeitet werden, die gleichzeitig oder hintereinander wirksam werden. Besonders geeignete Materialien für ein zumindest elastisch dehnbare Teilbereiche aufweisendes Umschließungselement weisen einen E-Modul zwischen 1 und 4000 N/mm² auf. Dabei haben gummiartige Materialien niedere E-Module und sind bevorzugt mit einer Dehnungsbegrenzung versehen. Materialien, wie Kunststoffe mit höheren E-Modulen, insbesondere zwischen 600 und 2000 N/mm², bevorzugt zwischen 800 und 1200 N/mm², bedürfen im allgemeinen keiner Dehnungsbegrenzung, die selbstverständlich dennoch vorgesehen werden kann.

Eine einfache Möglichkeit für die Dehnungsbegrenzung besteht darin, daß dem Umschließungselement bzw. dem elastisch dehnbaren Bereich des Umschließungselementes sich in Umfangsrichtung erstreckende dehnfeste Fäden aus den oben genannten Fasern zugeordnet sind, die beispielsweise in ein Band eingewebt sind. Speziell in dieser Ausführung könnte auch ein gummielastischer Kunststoff verwendet werden, der an das Band anvulkanisiert wird.

Ein weiterer Vorteil des Abstandes zwischen der Verbindungsstelle und der Nockenoberfläche liegt darin, daß der Krafteinleitungswinkel besser wird: Liegt das Umschließungselement am Nocken an, so wird die Schlaufe bei Zugkräften (z.B. Schließkrafterzeugung und dem Verzögern des Ventils im oberen Umkehrpunkt) stark beansprucht, weil der Kosinuswert eines kleinen Winkels größer ist. Durch den Abstand wird der Winkel nun größer, womit die Zugkräfte in der Schlaufe besser eingeleitet werden. Kleinere Umschlingungsradien, d.h. kleinere Grundkreisdurchmesser und kleinere Nockenkopfradien minimieren die Kräfte zusätzlich.

Weiters ist bevorzugt vorgesehen, daß der Innenseite des Umschließungselementes an der Verbindungsstelle ein Druckverteilungspolster zugeordnet ist, wodurch sich eine niedere Flächenpressung auf die Nockenumfangsfläche ergibt.

Besteht das Nockenelement und/oder das Umschließungselement aus einem Material mit einer reibungsarmen oder reibungsarm beschichteten Oberfläche, beispielsweise Polytetrafluoräthylen (PTFE), einem aufgedämpften Hartstoff, einem Silikon, Molybdänsulfid od. dgl., so ist gegebenenfalls eine Schmierung der Gleitflächen, also der Umfangsfläche des Nockenelementes und der anliegenden Innenfläche des Umschließungselementes nicht notwendig. Wird eine Schmierung gewünscht oder erforderlich, so ist bevorzugt vorgesehen, daß das Nockenelement radial zur Drehachse mindestens eine Ölbohrung aufweist, die am Umfang des Nockenelementes innerhalb des flexiblen Umschließungselementes mündet. Da das Umschließungselement sich nicht verdreht, ist auch eine äußere Ölzufuhr durch das Umschließungselement über eine flexible Leitung denkbar.

Anstelle eines Ölgleitfilms kann auch eine berührungslose Anordnung des Umschließungselementes vorgesehen werden, wenn beispielsweise eine magnetisierte innere Gleitschicht ausgebildet wird, die sich von einer gleichpolig magnetisierten Außenschicht des Nockenelementes abstößt.

Die zu beschleunigenden Massen sind im erfindungsgemäßen Ventiltrieb wesentlich reduziert. Der Einsatz von Leichtmetallen, Keramiken oder Kunststoff für das Ventil und/oder das Nockenfolgeelement erlauben eine Reduktion der zu beschleunigenden und verzögernden Massen von 50 % bis 80 % des Wertes eines Ventilstößels mit Rückstellfeder und hydraulischem Spielausgleich. Das Ventil kann kürzer ausgeführt werde, was wiederum die temperaturbedingten Längendifferenzen verringert, und Bauraum eingespart werden.

Auch das Nockenelement kann kleiner ausgeführt werden. Ebenso wird auch die Ausbildung von Kunststoffnockenelementen bzw. vollständig aus Kunststoff, beispielsweise im Spritzguß hergestellten Nockenwellen realisierbar. Auch die Verwendung anderer Leichtbaustoffe für die Herstellung der Nockenwellen oder der Nockenelemente, beispielsweise Aluminium wird möglich. Aufgrund der Massenreduzierung und der Gleitschmierung sind Kraftstoffeinsparungen von 5 % und mehr zu erwarten.

Nachstehend wird nun die Erfindung an Hand der Figuren der beiliegenden Zeichnungen näher beschrieben, ohne darauf beschränkt zu sein.

### Es zeigen:

Fig. 1 einen Ventiltrieb in Schließstellung des Ventils,
Fig. 2 den Ventiltrieb zu Beginn der Öffnungsphase, geringfügig geöffnet,
Fig. 3 den Ventiltrieb kurz nach Beginn der Öffnungsphase, bereits über die Hälfte geöffnet,
Fig. 4 den Ventiltrieb bei maximaler Ventilöffnung,
Fig. 5 vergrößert im Schnitt den Bereich A der Fig. 1 und
Fig. 6 eine Explosionsdarstellung der einzelnen Bestandteile des Ventiltriebs.

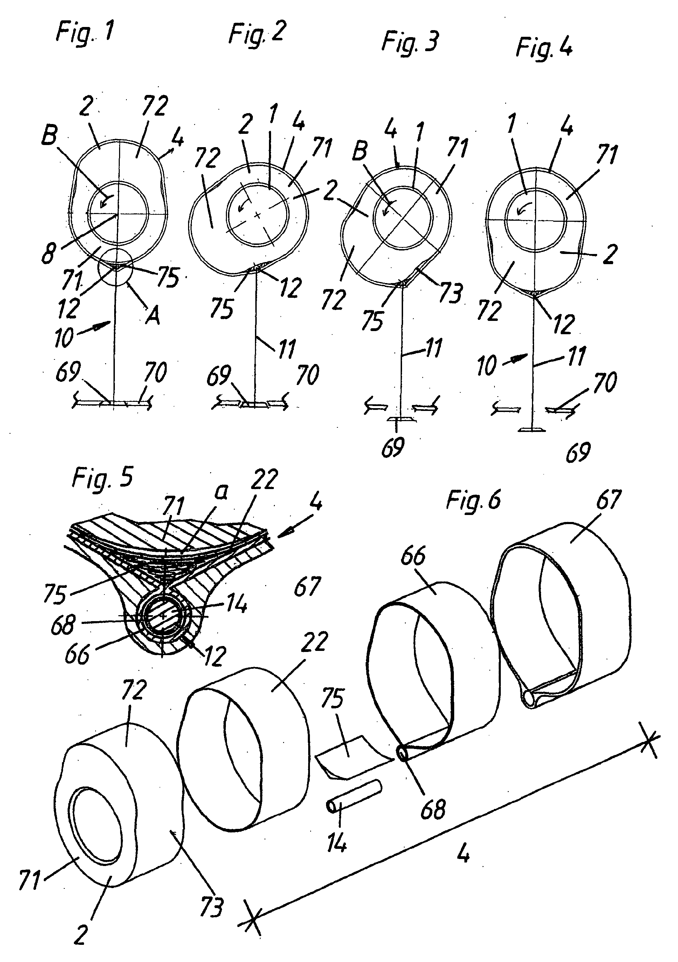

Der Ventiltrieb umfaßt ein auf einer Trägerwelle 1 befestigtes Nockenelement 2, das einen Grundkreisbereich 71, einen Nockenbereich 72 und einen konkaven Übergangsbereich 73 aufweist. Das Nockenelement 2 wird um die Achse 8 angetrieben und läuft innerhalb eines flexiblen Umschließungselementes 4 um, das über eine Verbindungsstelle 12 mit einem Nockenfolgeelement 10 verbunden ist, das, wie in den Fig. 1 bis 4 dargestellt, ein Ventilschaft 11 eines Stößelventiles ist, dessen Ventilteller 69 mit einem Ventilsitz 70 zusammenwirkt.

In der unteren Schließstellung des Ventils gemäß Fig. 1 liegt der Ventilteller 69 dichtend im Ventilsitz 70. Wird das Nockenelement 2 in Richtung des Pfeiles B in die Stellung nach Fig. 2 verdreht, so gleitet die Verbindungsstelle 12 entlang des Grundkreisbereiches 71 und erreicht den konkaven Übergangsbereich 73. Während dieser Teildrehung bleibt der Ventilteller 69 im Ventilsitz, da der Ventilschaft 11 nicht verschoben wird, und beginnt sich mit Erreichen der Position der Fig. 2 zu öffnen. Bei der Weiterdrehung in die Position nach Fig. 3 gleitet die Verbindungsstelle 12 über den Übergangsbereich 73 in den Nockenbereich 71, wobei durch die konkave Krümmung eine relativ rasche Lösung des Ventiltellers 69 aus dem Ventilsitz 70 erreicht wird. In der Position von Fig. 4 ist die maximale Offenstellung gegeben, von der aus bei der Weiterdrehung des Nockenelementes 4 in die Position nach Fig. 1 die Schließstellung wieder erreicht wird.

Das Umschließungselement 4 kann sich, da es über die Verbindungsstelle 12 gelenkig mit dem Ventilschaft 11 verbunden ist, nicht mit dem Nockenelement mitdrehen, sondern wird nur fortlaufend pulsierend verformt. Es weist eine mehrschichtige geschlossene Schlaufe auf, die eine innere Gleitschicht 22 aus einem reibungsmindernden Material (PTFE, Silikon, MoS₂ od. dgl.), eine mittlere Schicht 66 aus einem zugfesten Material und eine äußere Schicht 67 aus einem elastisch dehnbaren Material aufweist.

Die Schicht 66 aus einem zugfesten Material weist eine Länge auf, die größer als die Umschließungslänge des Nockenelementes 4 ist, und ist vorzugsweise ein in einer textilen Rundarbeitstechnik (Rundweben, Rundstricken, Rundwirken od. dgl.) nahtlos hergestelltes Gewebeband, das als Längenbegrenzung Kohle-, Kevlar-, Glas-, Bor-, Polyethylen-, Polyester-, Aramidfäden bzw. -fasern od. dgl. enthält, da diese eine hohe Festigkeit, Öl- und Temperaturbeständigkeit aufweisen. Die dehnfesten Fäden können in Umfangsrichtung des Nockenelementes verlaufende Schußfäden des Gewebebandes oder zusätzliche Fäden sein, die mit dem Gewebeband verbunden sind.

Die Schicht 67 ist aus einem elastisch dehnbaren, beispielsweise einem gummiartigen Material, dessen Länge in ungedehntem Zustand bevorzugt der Umschließungslänge des Nockenelementes entspricht, gegebenenfalls auch geringfügig kürzer sein kann. Das Material weist bevorzugt einen E-Modul zwischen 600 und 2000 N/mm², insbesondere zwischen 800 und 1200 N/mm² auf. Die elastisch dehnbare Schicht 67 kann zumindest bereichsweise mit der zugfesten Schicht 66 verbunden, beispielsweise verklebt sein. Das daraus gebildete Umschließungselement 4 weist somit zwei Umfangslängen auf, wobei die kleinere Umfangslänge der Länge der ungedehnten Schicht 67 und die größere Umfangslänge durch die Länge der zugfesten Schicht 66 gegeben ist, die eine Dehnungsbegrenzung für die dehnfähige Schicht 67 darstellt. Im ungedehnten Zustand sind daher die zugfesten Fäden in Zick-Zack, gewellt od. dgl. In der Stellung nach Fig. 3 wirken auf das Umschließungselement 4 die größten Zugkräfte ein, da dort der Übergang von der Beschleunigung zur Abbremsung des sich öffnenden Nockenfolgeelements liegt. In der Position nach Fig. 3 ist daher die größte Länge des Umschließungselementes gegeben, die die Länge der zugfesten Schicht 66 vorgibt. Die Nockenkontur und die Radien der konvexen Bereiche 71, 72 sind daher so gewählt, daß in der Stellung nach Fig. 1 das Umschließungselement 4 den in Fig. 5 ersichtlichen Abstand a von der Umfangsfläche des Nockenelementes 2 einhalten kann. Die Bedeutung dieses Abstandes a wird weiter unten erklärt.

Das Umschließungselement 4 weist eine Verbindungsstelle 12 für die Anlenkung des Nockenfolgeelementes auf, die in Fig. 5 vergrößert gezeigt ist. Die Verbindungsstelle 12 trägt einen Halter, beispielsweise eine Lagerbuchse 68, einen Lagerstift 14 (Fig. 6) oder dergleichen für das Nockenfolgeelement 10, wobei die Verbindung mit dem Ventilschaft 11 od. dgl. nicht näher gezeigt ist. Beispielsweise kann das obere Ende des Ventilschafts 11 gegabelt sein und zwei Ösen aufweisen, die auf den beiden aus dem Umschließungselement seitlich vorstehenden Enden des Lagerstifts 14 gelagert sind. Der Lagerstift kann daher auch in die elastisch dehnbare Schicht 67 eingebettet sein. Wird eine Lagerbuchse 68 verwendet, kann der Lagerstift zweiteilig sein und von beiden Seiten in die Lagerbuchse 68 eingesteckt sein.

Die zugfeste Schicht 66 bildet eine Öse für die Lagerbuchse 68, die von der dehnbaren Schicht 67 umschlossen ist, wie schematisch aus Fig. 5 ersichtlich ist. Die dehnbare schicht 67 dämpft Schwingungen und reduziert Geräusche, z. B. beim Schließen des Ventils. An der Innenseite der Verbindungsstelle 12 ist ein Druckverteilungspolster 75 angeordnet, das in der Stellung nach Fig. 1 eine etwa dreieckige Querschnittsform aufweist. Als innerste Schicht ist die reibungsmindernde Schicht 22 oder Beschichtung vorgesehen. Durch die Beabstandung der zugfesten Schicht 66 vom Grundkreisbereich 71 der Verbindungsstelle 12 werden die einzuleitenden Zugkräfte besser verteilt. Der Druckverteilungspolster 75 kann aus einem gummiartigen, elastischen Material sein, bevorzugt ist es aber mit Flüssigkeit oder einem Gel gefüllt, sodaß es verformbar, aber unelastisch ist, und sich an unterschiedliche Hohlraumquerschnitte besser anpaßt (Fig. 2, 3).

Fig. 1 und 5 zeigen die Situation bei ruhendem Motor in der mittleren Ventilschließstellung. Die Verbindungsstelle 12 liegt mittig im Grundkreisbereich 71 und der Ventilteller 69 liegt im Ventilsitz. Das Ventil ist kalt und der Ventilschaft 11 weist seine kürzeste Länge auf. Das Umschließungselement 4 ist dadurch in seine größte Länge vorgespannt, in der die dehnfähige Schicht 67 verlängert und durch die gestreckte zugfeste Schicht 66 begrenzt ist. Zwischen der Verbindungsstelle 12 und dem Grundkreisbereich 71 gibt es einen Abstand a. Das auf Kontraktion vorgespannte Umschließungselement 4 hält den Ventilteller 69 auch dann im Ventilsitz, wenn der Ventilschaft 11 durch die entstehende Betriebswärme länger wird, was bei üblichen Kraftfahrzeugmotoren etwa 0,2 mm, maximal 0,3 mm beträgt. Der Abstand a entspricht dieser maximalen Dehnungslänge, sodaß für das Nockenfolgeelement 10 ein Dehnungsfreiraum gebildet ist. Das vorgespannte, sich entsprechend der Wärmedehnung des Ventilschaftes 11 verkürzende Umschließungselement 4 hält daher den Ventilteller 69 unabhängig von der Länge des Ventilschaftes 11 dichtend im Ventilsitz 70.

Wenn die Stellung nach Fig. 2 erreicht ist, drückt der Nockenbereich 72 auf das Nockenfolgeelement 10, wobei der Öffnungszeitpunkt zwischen dem Ventil in seiner kalten, kürzesten und seiner erwärmten, längsten Länge sich geringfügig verschiebt, da im kaltem Zustand zuerst der Abstand a überwunden werden muß.

Der die Wärmedehnung erlaubende Abstand a und das auf Verkürzung vorgespannte Umschließungselement 4 stellen eine bevorzugte Ausführung eines Ventilspielausgleichs dar.

Eine Variante für die Sicherung der Schließstellung des Ventils besteht in der Ausnützung des Verdichtungs- und/oder Explosionsdruckes im Zylinder. Da das Umschließungselement 4 in dieser Ausführung nicht vorgespannt ist, benötigt es keine äußere dehnfähige Schicht 67. Die Schließkräfte entstehen bei höherer Drehzahl des Motors, beispielsweise ab 2000 Umdrehungen pro Minute, durch die Zwangsführung des Nockenfolgeelements und resultieren aus der Verzögerung der Schließbewegung nach dem Öffnungsmaximum des Nockenbereiches 72 bis zum Übergang in den Grundkreisbereich 71, in dem dann der Druck im Zylinder die Schließstellung des Ventils bis zum Beginn der Öffnungsphase sichert.

Eine weitere Möglichkeit zur an die thermischen Verhältnisse angepaßten Verringerung des Abstandes a liegt in der Verwendung einer Ventilspielausgleichsfeder, die beispielsweise zwischen dem Ventilschaft 11 und dem Lagerstift 14 wirksam wird.

## Patentansprüche

1. Ventiltrieb, insbesondere für Brennkraftmaschinen von Kraftfahrzeugen, mit mindestens einem angetriebenen Nockenelement (2), dessen Umfangsfläche einen Grundkreisbereich (71) und einen Nockenbereich (72) aufweist, und mit einem vom Nockenelement (2) gegen eine Rückstellkraft bewegbaren Nockenfolgeelement (10), insbesondere einem Ventilstößel, wobei das Nockenelement (2) drehbar in einem flexiblen Umschließungselement (4) angeordnet ist, das mit dem Nockenfolgeelement (10) gelenkig verbunden ist, **dadurch gekennzeichnet, daß** die Verbindungsstelle (12) zwischen dem Umschließungselement (4) und dem Nockenfolgeelement im Grundkreisbereich (71) einen eine Verlängerung des Nockenfolgeelements (10) erlaubenden Abstand (a) vom Nockenelement (2) aufweist.

2. Ventiltrieb nach Anspruch 1, **dadurch gekennzeichnet, daß** das Umschließungselement (4) auf Kontraktion vorgespannt ist.

3. Ventiltrieb nach Anspruch 2, **dadurch gekennzeichnet, daß** das Umschließungselement (4) aus zumindest zwei unterschiedlichen Materialien zusammengesetzt ist, von denen ein Material elastisch dehnbar ist.

4. Ventiltrieb nach Anspruch 3, **dadurch gekennzeichnet, daß** das Umschließungselement (4) zumindest zweischichtig ist, und das elastisch dehnbare Material die Außenschicht bildet.

5. Ventiltrieb nach Anspruch 3 oder 4, **dadurch gekennzeichnet, daß** der elastisch dehnbare Bereich aus einem Material mit einem E-Modul zwischen 1 und 4000 N/mm² gebildet ist.

6. Ventiltrieb nach Anspruch 5, **dadurch gekennzeichnet, daß** der E-Modul zwischen 600 und 2000 N/mm², insbesondere zwischen 800 und 1200 N/mm² liegt.

7. Ventiltrieb nach einem der Ansprüche 3 bis 6, **dadurch gekennzeichnet, daß** dem elastisch dehnbaren Material eine Dehnungsbegrenzung zugeordnet ist.

8. Ventiltrieb nach Anspruch 7, **dadurch gekennzeichnet, daß** die Dehnungsbegrenzung sich in Umfangsrichtung des Nockenelementes (2) erstreckende Fäden aus hochzugfesten Fasern enthält.

9. Ventiltrieb nach Ansprüche 7 oder 8, **dadurch gekennzeichnet, daß** die Dehnungsbegrenzung aus einem nahtlos geschlossenen Flächenmaterial besteht, das in einer textilen Rundarbeitstechnik hergestellt ist.

10. Ventiltrieb nach Anspruch 9, **dadurch gekennzeichnet, daß** das Umschließungselement (4) an der Verbindungsstelle (12) mit einem Lagerstift (14) für das Nockenfolgeelement (10) versehen ist.

11. Ventiltrieb nach Anspruch 10, **dadurch gekennzeichnet, daß** der Lagerstift (14) in ein schwingungs- und/oder geräuschdämpfendes Material eingebettet ist.

12. Ventiltrieb nach einem der Ansprüche 1 bis 11, **dadurch gekennzeichnet, daß** das Umschließungselement (4) eine innere Gleitschicht (22) aufweist.

13. Ventiltrieb nach einem der Ansprüche 1 bis 12, **dadurch gekennzeichnet, daß** das Nockenelement (2) eine gehärtete Umfangsfläche aufweist.

14. Ventiltrieb nach einem der Ansprüche 1 bis 13, **dadurch gekennzeichnet, daß** der Innenseite des Umschließungselements (4) an der Verbindungsstelle (12) ein Druckverteilungspolster (75) zugeordnet ist.

15. Ventiltrieb nach Anspruch 14, **dadurch gekennzeichnet, daß** der Druckverteilungspolster (75) aus einem verformbaren Material besteht.

16. Ventiltrieb nach einem der Ansprüche 1 bis 15, **dadurch gekennzeichnet, daß** zwischen dem Grundkreisbereich (71) und dem Nockenbereich (72) des Nockenelementes (2) ein konkaver Übergangsbereich (73) vorgesehen ist.
